Europäisches Patentamt

European Patent Office

Office européen des brevets

(19)

(11) Veröffentlichungsnummer: **0 358 882 B1**

# EUROPÄISCHE PATENTSCHRIFT

(12)

(45) Veröffentlichungstag der Patentschrift:
**27.12.91 Patentblatt 91/52**

(51) Int. Cl.⁵ : **E03C 1/23, F16C 11/06**

(21) Anmeldenummer: **89112916.5**

(22) Anmeldetag: **14.07.89**

(54) Ablaufventil mit einer Kugelgelenkanordnung.

(30) Priorität: **01.09.88 CH 3266/88**

(43) Veröffentlichungstag der Anmeldung:
**21.03.90 Patentblatt 90/12**

(45) Bekanntmachung des Hinweises auf die
Patenterteilung:
**27.12.91 Patentblatt 91/52**

(84) Benannte Vertragsstaaten:
**AT CH DE FR IT LI**

(56) Entgegenhaltungen:
**DE-A- 2 842 490**
**FR-A- 2 180 180**
**FR-A- 2 360 787**
**US-A- 2 553 991**
**US-A- 4 043 617**

(73) Patentinhaber: **KWC AG**
**Hauptstrasse 130**
**CH-5726 Unterkulm (CH)**

(72) Erfinder: **Hochstrasser, Ferdinand**
**Bündtenweg 217**
**CH-5105 Auenstein (CH)**

(74) Vertreter: **Patentanwälte Schaad, Balass &**
**Partner**
**Dufourstrasse 101 Postfach**
**CH-8034 Zürich (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfinung betrifft ein Ablaufventil mit einer Kugelgelenkanordnung zum leichtgängigen und dichten Einführen einer Schwenkbewegung eines Betätigungsorganes in das Innere eines einen Stutzen aufweisenden Ablaufventilgehäuses gemäss dem Oberbegriff des Anspruchs 1.

Ablaufventile von Waschbecken weisen häufig solche Kugelgelenkanordnungen auf, um die von einer Betätigungsarmatur herstammende Betätigungsbewegung für das Anheben bzw. Absenken eines Ventilstopfens von aussen in das Innere des Ventilgehäuses einzuführen. Diese Ventilgehäuse weisen einen rohrförmigen ungefähr in horizontaler Richtung seitlich abstehenden Stutzen auf, an dessen freiem Endbereich eine kugelzonenförmige Dichtfläche vorgesehen ist. An der Dichtfläche liegt eine Kunststoffkugel an, welche auf einem Heberbolzen für den Ventilstopfen sitzt. Am Stutzen ist eine Ueberwurfmutter mit einer ebenfalls an der Gelenkkugel anliegenden kugelzonenförmigen Anlagefläche angeschraubt, um die Gelenkkugel gegen die Dichtfläche zu drücken. Da die Kräfte für die Betätigung des Ventiles sehr klein sind, darf die Ueberwurfmutter nicht stark angezogen werden. Dies hat zur Folge, dass insbesondere bei bezüglich des Stutzens stromabwärts verstopftem Ablauf die Kugelgelenkanordnung nicht dicht ist oder dass bei zu stark angezogener Ueberwurfmutter das Ablaufventil nicht mehr betätigt werden kann. Ueberdies sind diese bekannten Kugelgelenkanordnungen aufwendig in der Herstellung und in der Montage.

Ein gattungsgemässes Ablaufventil ist aus der FR-A-2180180 bekannt. In den Stutzen des Ablaufventilgehäuses ist ein Dichtungsteil eingeführt, der eine sich am freien Ende des Stutzens abstützende Schulter aufweist. In der kugelzonenförmigen Ausnehmung des Dichtungsteils ist die vom Betätigungsorgan durchsetzte Gelenkkugel angeordnet. Auf den Stutzen ist eine Montagemutter mit einer Halskrause aufgeschraubt, deren innerer Rand mit seiner Anlagefläche auf die Gelenkkugel einwirkt, um diese mit dem Dichtungsteil in Kontakt zu pressen. Bei solchen Ablaufventilen muss die Montagemutter individuell angezogen werden und es ist dabei äusserst schwierig, jene Einstellung zu finden, die sowohl die Dichtigkeit der Kugelgelenkanordnung als auch die Leichtgängigkeit gewährleistet. Im weiteren ist es oft notwendig, die Montagemutter nachzuziehen.

Es ist deshalb Aufgabe der vorliegenden Erfindung, ein gattungsgemässes Ablaufventil zu schaffen, das keine individuelle Einstellung erfordert und in der Herstellung als auch in der Montage äusserst einfach ist.

Diese Aufgabe wird durch die Merkmale des kennzeichnenden Teiles des Anspruchs 1 gelöst.

Da sowohl die kugelzonenförmige Dichtfläche als auch die die Gelenkkugel gegen die Dichtfläche drückende Anlagefläche am Halteelement ausgebildet sind, ist das Andrücken der Gelenkkugel an die Dichtfläche immer, unabhängig von der Befestigung des Halteelementes am Gehäuse, sichergestellt. Somit bleibt ein leichtgängiges Bewegen der Gelenkkugel sowie eine Zuverlässige Dichtigkeit im Bereich der Dichtfläche aufrecht erhalten. Ueberdies kann nun die mit einem Betätigunsorgan verbundene Gelenkkugel zusammen mit dem Halteelement zu einer Baugruppe vormontiert werden und anschliessend diese Baugruppe mittels des Halteelementes direkt am Gehäuse befestigt werden, was die Montage erheblich vereinfacht.

Selbst bei grossen Druckdifferenzen wird ein sicheres Abdichten sichergestellt, indem die mit Druck vom Innern des Gehäuses her beaufschlagte Gelenkkugel mit einer zusätzlichen, dem Ueberdruck proportionalen Kraft gegen die Dichtfläche gedrückt wird.

Da die Anlagefläche elastisch auslenkbar ist, kann die Gelenkkugel problemlos in das einstückig ausgebildete Halteelement eingeschnappt werden.

Der das Halteelement im Bereich der Anlagefläche umgreifende rohrförmige Stutzen verhindert das elastische Auslenken der Anlagenfläche was ein definiertes Andrücken der Gelenkkugel an die Dichtfläche unter allen Bedingungen sicherstellt.

Eine besonders einfache Montage wird bei einer Ausführungsform gemäss Anspruch 5 ermöglicht. Da das Halteelement auf den Stutzen aufschnappbar ist, brauchen weder am Stutzen noch am Halteelement Gewinde ausgebildet zu werden. Dadurch wird auch die Herstellung vereinfacht.

Eine weitere bevorzugte Ausbildungsform ist in Anspruch 6 angegeben. Dadurch ist eine genau definierte Lage des Halteelementes bezüglich den Stutzen sichergestellt.

Eine besonders dichte Kugelgelenkanordnung wird dadurch erzielt, dass am Halteelement oder an der Gelenkkugel im Bereich der Dichtfläche eine Nut mit einem darin angeordneten Dichtelement vorgesehen ist. Das Dichtelement gleitet bei dieser Ausbildungsform entweder an der Oberfläche der Gelenkkugel oder an der Dichtfläche am Halteelement.

In bevorzugter Weise werden erfindungsgemässe Kugelgelenkanordnungen in sanitarischen Ablaufventilen zum dichten Einführen eines einen Ventilstopfen betätigenden Heberbolzens in das Innere von Ablaufventilgehäusen verwendet.

Die vorliegende Erfindung wird nun anhand eines in der Zeichnung dargestellten Ausführungsbeispiels näher erläutert. Es zeigen rein schematisch :

Fig. 1    ein Ablaufventil eines Waschbeckens mit einer Kugelgelenkanordnung, und

Fig. 2    eine Explosionsdarstellung der Kugelgelenkanordnung.

Im Auslaufbereich eines nur teilweise dargestellten Waschbeckens 10 ist ein allgemein bekanntes Ablaufventil 12 vorgesehen. Dieses weist einen, im wesentlichen hohlzylinderförmigen, die Wand des Waschbeckens 10 durchdringenden, oberen Gehäuseteil 14 auf, dessen oberer trichterförmig ausgeweiteter Endbereich 16 dicht an der Innenseite des Waschbeckens 10 anliegt. In der Wand des Waschbeckens 10 ist ein Ueberlaufabfluss 17 angeordnet, der in bekannter Art und Weise in den oberen Gehäuseteil 14 mündet. Am unteren gegen unten über das Waschbecken 10 vorstehenden Endbereich 18 des oberen Gehäuseteils 14 ist ein Aussengewinde vorgesehen, in welches ein unterer, ebenfalls im wesentlichen hohlzylinderischen Gehäuseteil 20 mit einem entsprechenden Innengewinde eingeschraubt ist. Zwischen dem oberen Ende des unteren Gehäuseteils 20 und dem Waschbecken 10 ist eine ringförmige Dichtung 22 vorgesehen.

Am unteren Gehäuseteil 20 ist ein rohrförmiger Stutzen 24 angebracht, dessen Längsachse in radialer Richtung vom rohrförmigen unteren Gehäuseteil 20 absteht. In den vom unteren Gehäuseteil 20 entfernten, freien Endbereich des Stutzens 24 ist ein Halteelement 26 mit seinem im wesentlichen zylinderförmigen Teil 26' zapfenförmig eingesetzt. Der zylinderförmige Teil 26' weist eine kugelpfannenförmige Ausnehmung 27 auf, in welcher eine Gelenkkugel 28 gelagert ist. Die Gelenkkugel 28 sitzt auf einem zweiarmigen Heberbolzen 30, der das Halteelement 26 ungefähr in dessen Längsrichtung durchdringt und dessen innerer Arm 32 in das Innere des unteren Gehäuseteils 20 reicht und dessen äusserer Arm 34 über ein Gestänge 36 mit einer nur andeutungsweise dargestellten Armatur 38 wirkverbunden ist.

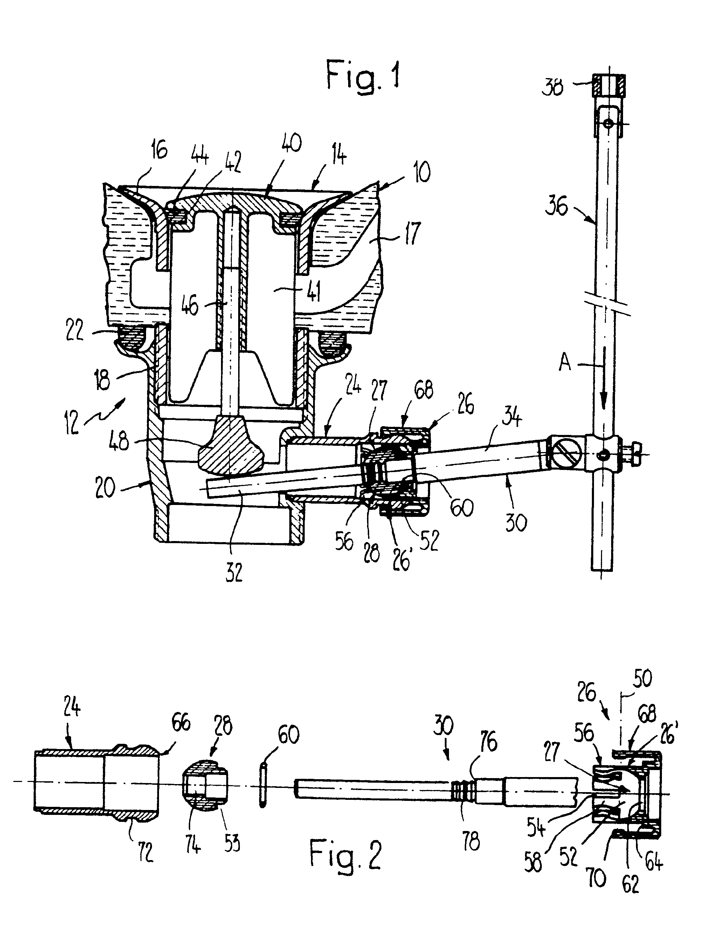

Im oberen Gehäuseteil 14 ist ein im wesentlichen pilzförmiger Ventilstopfen 40 mit in radialer Richtung verlaufenden, flügelförmigen Führungselementen 41 in vertikaler Richtung verschiebbar geführt. Am äusseren Rand des Ventilstopfens 40 ist eine umlaufende Nut 42 vorgesehen, in welcher eine ringförmige Dichtung 44 angeordnet ist. Die Dichtung 44 steht an der trichterförmigen Erweiterung des oberen Gehäuseteils 14 an. In den Ventilstopfen 40 ist von unten eine Bolzen 46 eingeschraubt, an dessen unterm Ende eine kopfförmige Verdickung 48 vorgesehen ist, welche sich am inneren Arm 32 des Heberbolzens 30 abstützt. Bei einer Bewegung des Gestänges 36 in Richtung des Pfeiles A wird der Heberbolzen 30 um die Gelenkkugel 28 im Uhrzeigersinn verschwenkt, was zur Folge hat, dass der Ventilstopfen 40 angehoben wird und dass Wasser aus dem Waschbecken 10 ablaufen kann. Bei der Bewegung des Gestänges 36 entgegen der Pfeilrichtung A wird der Heberbolzen 30 im Gegenuhrzeigersinn wieder in die in der Figur 1 dargestellte Stellung verschwenkt, wodurch der Ventilstopfen 40 sich in Folge seines Eigengewichts der Bewegung des freien Endberiches des inneren Arms 32 des Heberbolzens 30 folgend absenkt, bis die Dichtung 44 wieder an der trichterförmigen Erweiterung 16 des oberen Gehäuseteils 14 ansteht.

Die kugelpfannenförmige Ausnehmung 27 im zylinderförmigen Teil 26' des Halteelementes 26 weist auf der, bezüglich einer durch den Mittelpunkt der Gelenkkugel 28 und senkrecht zur Längsachse des Halteelementes 26 verlaufenden Ebene 50 (siehe insbesondere Figur 2), aussenliegenden Seite eine kugelzonenförmige Dichtfläche 52 auf. Auf der innen liegenden Seite dieser Ebene 50 sind vom gegen das Innere des Stutzens 24 gerichteten Ende des Halteelementes 26 bis in den Bereich der Ebene 50 reichende, im wesentlichen in Axialrichtung verlaufende und in radialer Richtung durchgehende Schlitze 54 vorgesehen. Diese begrenzen in radialer Richtung auslenkbare Finger 56. Diese Finger 56 umgreifen, in Axialrichtung des Halteelementes 26 gesehen, teilweise die Gelenkkugel 28 und liegen mit ihren Anlageflächen 58 an der Gelenkkugel 28 an (siehe Fig. 2). Im freien Endbereich sind die Finger 56 auf ihrer innen liegenden Seite kegelförmig erweitert, um ein problemloses Einführen der Gelenkkugel 28 in die kugelpfannenförmige Ausnehmung 27 zu ermöglichen.

Im Bereich der Dichtfläche 52 weist die Gelenkkugel 28 eine umlaufende Nut 53 auf, in welcher ein O-Ring 60 angeordnet ist. Der Schwenkwinkel des Heberbolzens 30 und somit auch der Gelenkkugel 28 ist durch eine umlaufende, die Dichtfläche 52 begrenzende, in Richtung gegen Aussen der kugelpfannenförmigen Ausnehmung 27 folgende Rippe 62 derart begrezt, dass der O-Ring 60 nie ab der Dichtfläche 52 abläuft.

Der zylinderförmige, zapfenartig in den Stutzen 24 eingesetzte Teil 26' des Halteelementes 26 ist aussen von einer umlaufenden, in radialer Richtung vorstehenden Kante 64 begrenzt. Diese steht am als ringförmige Anschlagfläche ausgebildeten Ende 66 des Stutzens 24 an. Das Halteelement 26 weist ein hohlzylinderförmiges Mantelelement 68 auf, das den zylinderförmigen Teil 26' mit radialem bestand und in axialer Richtung teilweise umschliesst, sowie am äusseren Endbereich des Halteelementes 26 mit dem zylinderförmigen Teil 26' einstückig verbunden ist. Dieses Mantelelement 68 umgreift den freien Endbereich des Stutzen 24 und ist mit einem umlaufenden Wulst 70 in einer entsprechenden Nut 72 im Stutzen 24 eingeschnappt. Die aneinander anliegenden Flächen dieser Wulst-Nut-Schnappverbindung sind derart konisch ausgebildet, dass die Kante 64 gegen das freie Ende 66 des Stutzens 24 gezogen wird.

Um eine schnelle und genaue Montage zu ermöglichen, weist die zylinderförmige Ausnehmung 74 in der Gelenkkugel 28 eine schrittförmige Erweiterung auf, welche an einer gegengleichen Verjüngung 76 am Heberbolzen 30 zur Anlage kommt (siehe Fig. 2). Eine sägezahnförmige Rippung 78 stellt den sicheren Sitz der aufgepressten Gelenkkugel 28 auf dem Heberbolzen 30 sicher. Anschliessend wird der O-Ring 60 in die umlaufende Nut 53 an der Gelenkkugel 28 eingesetzt und die Gelenkkugel 28 zusammen mit dem O-Ring 60 und dem Heberbolzen 30 in die kugelförmige Ausnehmung 27 des Halteelementes 26 eingesetzt. Dabei spreizen die Finger 56 elastisch auseinander und drücken anschliessend mit ihren Anlageflächen 58 die Gelenkkugel 28 bzw. den O-Ring 60 mit einer definierten Kraft gegen die Dichtfläche 52. Diese so vormontierte Baugruppe wird nun in den Stutzen 24 zapfenförmig eingesetzt und das Mantelelement 68 an der Nut 72 eingeschnappt, wie dies in der Figur 1 gezeigt ist. Da nun die Finger 56 an der inneren Mantelfläche des hohlzylindrischen Stutzens 24 satt anliegen, wird ein Aufspreizen der Finger 56 verhindert, was ein genau definiertes Anliegen des O-Ringes 60 bzw. der Gelenkkugel 28 an der Dichtfläche 52 während der gesamten Lebensdauer der Kugelgelenkanordnung sicherstellt. Bei der Gelenkkugel 28 und dem Halteelement 26 handelt es sich vorzugsweise um Spritzgussteile aus Kunststoff. Diese sind äusserst genau und einfach in der Herstellung.

## Patentansprüche

1. Ablaufventil mit einer Kugelgelenkanordnung zum leichtgängigen und dichten Einführen einer Schwenkbewegung eines Betätigungsorganes (30) in das Innere eines einen Stutzen (24) aufweisenden Ablaufventilgehäuses (20), mit einer mit dem Betätigungsorgan (30) verbundenen Gelenkkugel (28), die in einer Ausnehmung (27) mit einer kugelzonenförmigen Dichtfläche (52) eines in den Stutzen (24) des Ablaufventilgehäuses (20) eingesetzten Teils (26') gelagert ist, mit Befestigungsmitteln (68), um die Kugelgelenkanordnung am Stutzen (24) zu fixieren und mit einer Anlagefläche (58), um die Gelenkkugel (28) gegen die Dichtfläche (52) zu drücken, gekennzeichnet durch ein einstückiges Halteelement (26), an dem der Teil (26') und die Befestigungsmittel (68) angeformt sind, und das auf der bezüglich der Gelenkkugel (28) dem Innern des Ablaufventilgehäuses (20) zugewandten Seite die Anlagefläche (58) und auf der vom Innern abgewandten Seite die Dichtfläche (52) aufweist, wobei der die Anlagefläche (58) tragende Bereich (56) des Halteelementes (26) in radialer Richtung zum Einsetzen der Gelenkkugel (28) in die Ausnehmung (27) auslenkbar ausgebildet und zum Zusammenwirken mit dem Stutzen (24) bestimmt ist, um bei in den Stutzen (24) montierter Kugelgelenkanordnung die Gelenkkugel (28) mit definierter Kraft gegen die Dichtfläche (52) zu drücken.

2. Ablaufventil nach Anspruch 1, dadurch gekennzeichnet, dass der die Anlagefläche (58) trägende Bereich (56) des Halteelementes (26) elastisch auslenkbar ist.

3. Ablaufventil nach Anspruch 1 oder 2, dadurch gekennzeichnet, dass das Halteelement (26) mehrere die Gelenkkugel (28), vorzugsweise vom Bereich der Dichtfläche (52) her teilweise umgreifende Finger (56) aufweist, an welchen je ein Teil der Anlagefläche (58) ausgebildet ist.

4. Ablaufventil nach einem der Ansprüche 1 bis 3, dadurch gekennzeichnet, dass der Stutzen (24) rohrförmig ausgebildet ist und das Halteelement (26) im Bereich der Anlagefläche (58) anliegend umgreift.

5. Ablaufventil nach einem der Ansprüche 1 bis 4, dadurch gekennzeichnet, dass das Halteelement (26) zapfenförmig in den Stutzen (24) einführbar ist und das Befestigungsmittel ein zum schnappverschlussartigen Umgreifen des freien Endbereichs des Stutzens (24) ausgebildetes Mantelement (68) aufweist.

6. Ablaufventil nach Anspruch 5, dadurch gekennzeichnet, dass das freie Ende des Stutzens (24) eine ringförmige Anschlagfläche (66) aufweist, gegen die eine am Halteelement (26) ausgebildete Gegenfläche (64) mittels des Schnappverschlusses (70, 72) gepresst ist.

7. Ablaufventil nach einem der Ansprüche 1 bis 6, dadurch gekennzeichnet, dass am Halteelement (26) oder an der Gelenkkugel (28) im Bereich der Dichtfläche (52) eine Nut (53) mit einem darin angeordneten Dichtelement, vorzugsweise einem O-Ring (60), vorgesehen ist.

## Claims

1. Discharge valve with a ball-and-socket joint arrangement for easy and leakproof introduction of a swivel movement of a control element (30) into the interior of a discharge valve housing (20), which has a connecting piece (24), with a joint ball (28) which is connected to the control element (30) and rests in a recess (27) with a spherical-zone type of sealing surface (52) of a part (26') which is inserted into the connecting piece (24) of the discharge valve housing (20), with attaching means (68) to fix the ball-and-socket joint arrangement to the connecting piece (24), and with a contact surface in order to press the joint ball (28) against the sealing surface (52), characterised in that there is a single-piece holding element (26) on which the part (26') and the attaching means (68) are formed and which has the contact side (58) facing the interior of the discharge valve housing (20) with respect to the joint ball (28) and the sealing surface (52) on the side remote from the interior, the region (56) of the holding element (26) bearing the contact surface (58) is designed so as to be deflectable in the radial direction in order to insert the joint ball (28) into the recess (27) and is intended to interact with the connecting piece (24) so as to press the joint ball (28) with a defined force against the sealing surface (52) in the ball-and-socket joint arrangement mounted in the connecting piece (24).

2. Discharge valve according to Claim 1, characterised in that the region (50) of the holding element (26) bearing the contact surface (58) is elastically deflectable.

3. Discharge valve according to Claim 1 or 2, characterised in that the holding element (26) has a plurality of fingers (56), partially gripping round the joint ball (28) preferably from the region of the sealing surface (52), a part of the contact surface (58) being formed on each of said fingers.

4. Discharge valve according to one of Claims 1 to 3, characterised in that the connecting part (24) is of tubular form and grips round the holding element (26) in the region of the contact surface (58), in an abutting manner.

5. Discharge valve according to one of Claims 1 to 4, characterised in that the holding element (26) can be introduced in the form of a plug into the connecting piece (24) and the attaching means has a covering element (68) gripping round the free end region of the connecting piece (24) in the form of a snap closure.

6. Discharge valve according to Claim 5, characterised in that the free end of the connecting piece (24) has an annular stop face (66), against which a counterface (64) formed on the holding element (26) is pressed by means of the snap closure (70, 72).

7. Discharge valve according to Claims 1 to 6, characterised in that a groove (53) containing a sealing element, preferably an O-ring (60), is provided on the holding element (26) or on the joint ball (28) in the region of the sealing surface (52).

## Revendications

1. Bonde comprenant un dispositif d'articulation à rotule servant à transmettre un mouvement oscillant issu d'un organe d'actionnement (30) avec douceur et à joint étanche dans le volume intérieur d'un corps (20) de bonde présentant une douille (24), comprenant une rotule d'articulation (28) solidaire de l'organe d'actionnement (30), qui tourillonne dans un évidement (27) à surface d'étanchéité (52) en forme de zone de sphère d'une pièce (26') encastrée dans la douille (24) du corps (20) de la bonde, des moyens de fixation (68) qui servent à fixer le dispositif d'articulation à rotule à la douille (24) et une surface d'appui (58) servant à presser la rotule d'articulation (28) contre la surface d'étanchéité (52), caractérisée par un élément de fixation (26) en une seule pièce, sur lequel sont formés la pièce (26') et les moyens de fixation (68) et qui présente la surface d'appui (58) sur le côté dirigé vers l'intérieur du corps de bonde (20), relativement à la rotule d'articulation (28) et la surface d'étanchéité (52) sur le côté qui est à l'opposé de l'intérieur, la région (56) de l'élément de fixation (26) qui porte la surface d'appui (58) étant constituée de façon à pouvoir céder dans la direction radiale pour permettre d'emboîter la rotule d'articulation (28) dans l'évidement (27) et étant destinée à coopérer avec la douille (24), pour presser la rotule d'articulation (28) contre la surface d'étanchéité (52) avec une force définie lorsque le dispositif d'articulation à rotule est montée dans la douille (24).

2. Bonde selon la revendication 1, caractérisée en ce que la région (56) de l'élément de fixation (26) qui porte la surface d'appui (58) peut se dilater élastiquement.

3. Bonde selon la revendication 1 ou 2, caractérisée en ce que l'élément de fixation (26) présente plusieurs doigts (56) qui entourent partiellement la rotule d'articulation (28), de préférence en partant de la région de la surface d'étanchéité (52), sur chacun desquels est formée une partie de la surface d'appui (58).

4. Bonde selon une des revendications 1 à 3, caractérisée en ce que la douille (24) est de configuration tubulaire et entoure l'élément de fixation (26) dans la région de la surface d'appui, en s'appuyant contre cet élément.

5. Bonde selon une des revendications 1 à 4, caractérisée en ce que l'élément de fixation (26) peut être engagé par encastrement dans la douille (24) et l'élément de fixation présente un élément enveloppe (68) conformé pour entourer la région terminale libre de la douille (24) en formant une fermeture à encliquetage.

6. Bonde selon la revendication 5, caractérisée en ce que l'extrémité libre de la douille (24) présente une surface d'appui annulaire (66) contre laquelle la contre-surface (64) formée sur l'élément de fixation (26) est pressée au moyen de la fermeture à encliquetage (70, 72).

7. Bonde selon une des revendications 1 à 6, caractérisée en ce que, sur l'élément de fixation (26) ou sur la rotule d'articulation (28) est prévue, dans la région de la surface d'étanchéité (52), une gorge (53) dans laquelle est placé un élément d'étanchéité, de préférence une bague torique (60).

EP 0 358 882 B1

# Fig. 1

# Fig. 2